## Europäisches Patentamt
## European Patent Office
## Office européen des brevets

(19)

(11) Veröffentlichungsnummer : **0 152 913**
**B1**

(12)

# EUROPÄISCHE PATENTSCHRIFT

(45) Veröffentlichungstag der Patentschrift :
09.11.88

(51) Int. Cl.⁴ : **H 02 M   3/335**

(21) Anmeldenummer : 85101577.6

(22) Anmeldetag : 13.02.85

(54) Schaltungsanordnung für ein Sperrwandler-Schaltnetzteil.

(30) Priorität : 17.02.84 DE 3405833

(43) Veröffentlichungstag der Anmeldung :
28.08.85 Patentblatt 85/35

(45) Bekanntmachung des Hinweises auf die Patenterteilung : 09.11.88 Patentblatt 88/45

(84) Benannte Vertragsstaaten :
AT FR GB IT NL

(56) Entgegenhaltungen :
EP-A- 0 046 515

(73) Patentinhaber : Siemens Aktiengesellschaft Berlin und München
Wittelsbacherplatz 2
D-8000 München 2 (DE)

(72) Erfinder : Paulik, Ernst
Rosenstrasse 12
D-8893 Hilgertshausen (DE)

**Beschreibung**

Die Erfindung bezieht sich auf eine Schaltungsanordnung gemäß dem Oberbegriff des Anspruchs 1. Eine solche Sperrwandlerschaltung ist in der Siemens-Broschüre « Schaltnetzteile mit der IS TDA 4600 » (Abbildung 20) und auch in der EP-A-46515, Fig. 1 und 2, beschrieben.

Bei der zum Beispiel in der Fig. 1 der EP-A-46515 dargestellten Schaltungsanordnung erhält der Ansteuerbaustein seine Energie von einer primärseitigen Versorgungsspule, die so gewickelt ist, daß die Versorgungsspannung der stabilisierten Ausgangsspannung folgt. Dementsprechend groß ist der Regelumfang : Die Schaltung kann mit Netzspannungen zwischen 90 V und 270 V arbeiten. Damit das Sperrwandler-Schaltnetzteil bereits während der Anlaufphase eine ausreichend hohe Versorgungsspannung erhält, ist es vorgesehen, dem Netz eine Wechselspannung zu entnehmen, diese Spannung zu glätten, gleichzurichten und dann an den Versorgungseingang der Ansteuerschaltung zu legen.

Diese Anlaufhilfe arbeitet aber nicht immer zufriedenstellend. Diese Anlaufhilfe läßt sich nicht ohne weiteres so dimensionieren, daß sie einerseits in der Anlaufphase genügend Energie liefert und andererseits im Normalbetrieb nicht störend in Erscheinung tritt.

Der Erfindung liegt daher die Aufgabe zugrunde, eine Sperrwandlerschaltung der eingangs genannten Art mit einer Einschalthilfe zu versehen, die einen sicheren Start gewährleistet und sich anschließend abschaltet.

Diese Aufgabe wird durch die kennzeichnenden Merkmale des Anspruchs 1 gelöst.

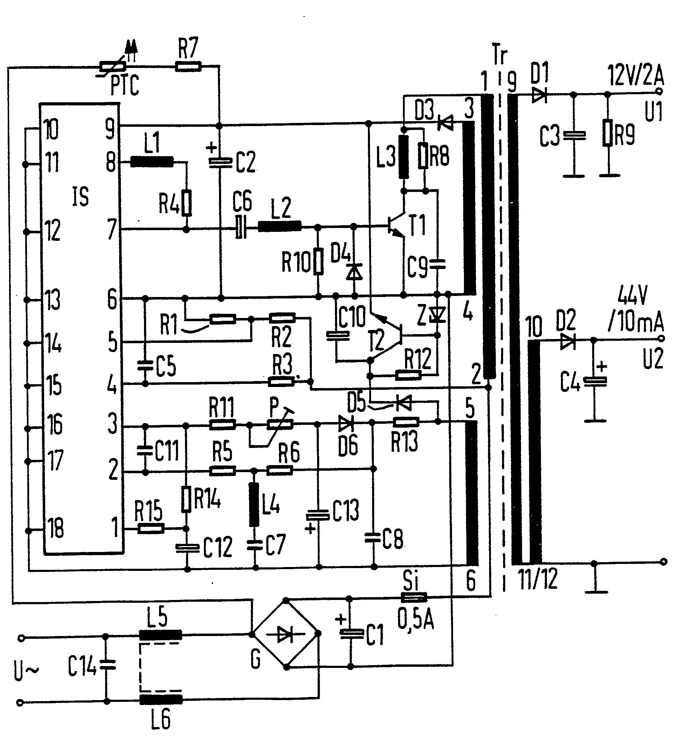

Aus Abbildung 26 der zitierten Firmenveröffentlichung ist an sich schon eine Schaltung bekannt, bei der ebenfalls der Versorgungseingang des Ansteuerbausteins mit einem Transistor verbunden ist, dem eine Diode vorgeschaltet ist und dessen Basis über eine Zenerdiode an das Masse-Ende der Regelwicklung gelegt ist. Dort wird allerdings die Spannung nicht der Regelwicklung, sondern dem Netz entnommen, und zwar zu dem Zweck, den Anlauf zu beschleunigen und nicht etwa zuverlässiger zu gestalten.

Vorteilhafte Ausgestaltungen und Weiterbildungen der Erfindung sind Gegenstand zusätzlicher Ansprüche.

Der Lösungsvorschlag wird nun anhand eines Ausführungsbeispiels unter Bezugnahme auf die beigefügte Figur näher erläutert.

In der Figur ist eine Schaltungsanordnung für zwei Ausgangsspannungen von 12 V bzw. 44 V dargestellt. Als integrierte Sperrwandlerschaltung IS wird der Baustein TDA 4601 D verwendet, der beispielsweise im Prinzip in SIEMENS « Schaltbeispiele », Ausgabe 1980/81, Seiten 194 bis 197 beschrieben ist. Die integrierte Schaltung IS übernimmt im freischwingenden Sperrwandlernetzteil die Ansteuerung, Regelung und Überwachung des Schalttransistors T1. Die Schaltung ist für eine Eingangsnetzwechselspannung U ~ von 90 V bis 270 V ausgelegt, die mittels der Gleichrichterbrücke G gleichgerichtet und dem Ladekondensator C1 zugeführt wird. Der Schalttransistor T1 legt diese am Kondensator C1 anstehende Spannung periodisch an die Wicklung 1-2 des Sperrwandlertransformators Tr, wobei die integrierte Schaltung IS die erforderliche Regelung übernimmt.

An den Sekundärwicklungen 9/10-11/12 entstehen während der Sperrzeit der Schalttransistors T1 Spannungsspitzen, die über die Dioden D1, D2 gleichgerichtet werden und die Betriebsspannungen ergeben. Mit dem Potentiometer P können diese Betriebsspannungen justiert werden.

Die Ausgangslast darf zwischen 0 und 100 % schwanken, wobei Leerlauf-, Kurzschluß- und Überlastsicherheit gegeben sind.

In der Anlaufphase, solange der Kaltleiter PTC kalt ist, liefert er für einige Sekunden den nötigen Strom, um den Kondensator C2 auf die Versorgungsspannung für die integrierte Schaltung IS aufzuladen. Die Versorgungsspannung wird der integrierten Schaltung IS über den Eingang 9 zugeführt. Damit kann die IS die ersten Basisstromimpulse für den Schalttransistor T1 liefern. Nach der Anlaufphase erfolgt die Versorgung der IS über die Diode D3 aus der Transformatorenwicklung 3-4. Deren Wickelsinn ergibt eine stabilisierte Gleichspannung, wobei sich diese Spannung nur so schnell aufbauen kann, wie die Ausgangskondensatoren C3, C4 aufgeladen werden. Durch die Verwendung einer « stabilisierten Phase » für die Versorgungsspannung der integrierten Schaltung IS erzielt man den Vorteil, daß diese Spannung für Eingangsspannungen zwischen 90 V und 270 V nahezu konstant ist.

Die im Kondensator C2 gespeicherte Ladung reicht allerdings für einen sicheren Anlauf nicht immer aus. Deshalb wird während der Anlaufzeit mit dem Transistor T2 eine Gleichspannung an den Eingang 9 geschaltet, die aus der Transformatorenwicklung 5-6 in der unstabilisierten Phase gewonnen wird. In der unstabilisierten Phase ist bereits nach dem ersten Stromimpuls ein Wechselspannungsanteil vorhanden, der mit der Diode D5 gleichgerichtet werden kann. Nach dem Hochlaufen des Netzteils schaltet sich der Transistor T2 durch die an der Basis liegende Zenerdiode Z wieder ab.

Der Schutz gegen zu tiefe Netzspannung wird durch den Spannungsteiler R1, R2 am Eingang 5 erreicht, der als zusätzliche Trigger- und Blockiermöglichkeit bei Unterschreiten einer vorbestimmten Spannung den Ausgangsanschluß 8 sperrt.

Im Regelbetrieb werden am Eingang 2 der IS die Null-Durchgänge der von der Regelwicklung 5-6 eingespeisten Frequenz registriert und an die Steuerlogik weitergegeben.

An den Anschluß 3 werden die mit der Diode D6 gleichgerichteten Amplitudenänderungen der Regelwicklung 5-6 gelegt. Eine Nachbildung des Kollektorstroms des Schalttransistors T1 erfolgt durch ein externes RC-Glied R 3/C 5 an Anschluß 4 und intern in der IS festgelegten Schwellspannungen. Bei Vergrößerung der Kapazität des Kondensators C5 vergrößert sich der größtmögliche Kollektorstrom des Schalttransistors T1 (Umkehrpunkt). Damit ist der gewünschte Regelbereich festgelegt.

Der Schalttransistor T1 wird über den Anschluß 7 der IS angesteuert, wobei zwischen Anschluß 7 und Anschluß 8 eine Stromgegenkopplung L 1/R 4 mit einem externen Widerstand eingeführt ist, dessen Widerstandswert die maximale Amplitude des Basisansteuerstroms für den Schalttransistor T1 bestimmt.

Der Kondensator C6 dient zur Potentialtrennung zwischen dem Transistor T1 und der integrierten Schaltung IS.

Bei kurzgeschlossenem Ausgang ist die Ausgangsspannung U2 fast Null, so daß die durch Schaltvorgänge des Transistors T1 erzeugten Störschwingungen « falsche Null-Durchgänge » erzeugen, die wiederum ein Einschalten des Transistors bewirken. Da im Transformator zu diesem Zeitpunkt noch viel magnetische Energie gespeichert ist, wird der Transformatorkern in die Sättigung gefahren. Bei diesem Vorgang verliert der Transformator seine induktiven Eigenschaften, wodurch der Strom stark ansteigt, was letztendlich zu einer Zerstörung des Schalttransistors führt.

Zur « Absaugung » der Überschwinger des Schalttransistors T1 dient der LC-Serienschwingkreis L4/C7, der über den Widerstand R5 an den Eingang 2 der IS gelegt ist. Die Resonanzfrequenz des LC-Gliedes wird dabei auf die Frequenz der aperiodisch abklingenden Störschwingung abgestimmt. R und C ergeben sich aus der Optimierung der Regeleigenschaften. Der Wert der Induktivität L4 läßt sich nach folgender Gleichung berechnen :

$$L = 1/(4Cf_{ü}^2), \text{ mit } f_{ü} = \text{Frequenz der Störschwingung.}$$

Wenn die Schaltung eigens gegen Überspannungen geschützt werden soll, empfiehlt es sich, zwischen die beiden IS-Anschlüsse 6 und 9 eine Zenerdiode von beispielsweise 18 V zu legen. Diese Diode schneidet kurzzeitige Spannungsspitzen ab und wird bei längerdauernden Überspannungen zerstört. Sie bildet dann einen Dauerkurzschluß ; das Netzteil ist damit abgeschaltet.

Im folgenden ist eine bevorzugte Dimensionierung der Bauelemente des in der Figur dargestellten Ausführungsbeispiels angeführt :

| | | | | | |
|---|---|---|---|---|---|
| R1 | | 5,6kΩ | C1, C2 | | 100µF |
| R2, R3 | | 270kΩ | C3 | | 1000µF |
| R4 | | 3,3Ω | C4 | | 10µF |
| R5 | | 10kΩ | C5 | | 4,7nF |
| R6 | | 330Ω | C6 | | 100µF |
| R7 | | 2,7kΩ | C7 | | 2,2nF |
| R8 | | 560Ω | C8 | | 3,3nF |
| R9 | | 220Ω | C9 | | 2,2nF |
| R10 | | 27Ω | C10 | | 1µF |
| R11 | | 12kΩ | C11 | | 100pF |
| R12 | | 5,1kΩ | C12 | | 100µF |
| R13 | | 100Ω | C13 | | 1µF |
| R14 | | 1,2kΩ | C14 | | 0,33µF |
| R15 | | 200Ω | | | |
| P | | 10kΩ | | | |
| D1 | | BYW 72 | T1 | | BU 508 A |
| D2, D3 | | BY 360 | T2 | | BC 639 |
| D4 | | 1 N 4007 | | | |
| D5, D6 | | BY 360 | IS | | TDA 4601 D |
| Z | | B 7 X 83 C 11 | | | |
| L1 | | Rohrkern 1 Wdg. | | | |
| L2 | | HF-Drossel 2,2µH | | | |
| L3 | | Rohrkern 5 Wdg. | | | |
| L5 / L6 | | Entstördrossel 2 x 47mH | | | |

Die in der Figur dargestellte Schaltungsanordnung ist für maximale Ausgangsleistungen bis zu 30 W ausgelegt. Sie läßt sich vorzugsweise in einem Miniatur-Schaltnetzteil einsetzen. Für die erfindungsgemäße Schaltungsanordnung bieten sich eine Reihe von Einsatzmöglichkeiten an, beispeilsweise als Stromversorgung für Videorecorder, Videokameras, Kamerarecorder, große Radio-Recorder, Hifi-Komponenten, Schreibmaschinen, Kopierer, Personal- und Home-Computer, Floppi-Disc-Laufwerke, Printer und Plotter sowie Meß- und Prüfgeräte. Eine weitere Anwendungsmöglichkeit besteht bei Ladegeräten mit stabilisierter Ausgangsspannung für Blei- und NC-Akkumulatoren, insbesondere zur Schnelladung von NC-Sinterzellen, wobei Geräte mit entladenen Akkumulatoren mit eingestecktem Ladegerät sofort weiterbenutzt werden können. Diese Ladegeräte sind beispielsweise für Video-Portables, Videokameras, Kamerarecorder, Photoblitzgeräte, Elektrowerkzeuge (Schrauber, Bohrer, Rasenscheren) Modellsportfahrzeuge (Elektroflug, Elektroautos, Sender- und Empfänger-Akkumulatoren), Krankenfahrstühle, PKW-Batterien sowie Aktentaschen-Computer, geeignet.

**Patentansprüche**

1. Schaltungsanordnung für ein Sperrwandler-Schaltnetzteil mit folgenden Merkmalen :

1. ein Transformator weist eine Primärwicklung (1-2), eine primärseitige Versorgungswicklung (3-4), eine primärseitige Regelwicklung (5-6) und mindestens eine sekundärseitige Wicklung (9-11 ; 10-12) auf ;

2. ein Schalttransistor ($T_1$) schaltet eine durch eine Gleichrichterbrücke (G) gleichgerichtete und durch einen Kondensator ($C_1$) geglättete Eingangsspannung an die Primärwicklung (1-2) ;

3. zur Ansteuerung des Schalttransistors ($T_1$) ist eine integrierte Ansteuerschaltung (IS) vorgesehen ;

4. die Ansteuerschaltung (IS) weist mindestens einen Versorgungsspannungseingang (9), einen Meßspannungseingang (3), und einen die Null-Durchgänge der Meßspannung registrierenden Eingang (2) auf ;

5. der Versorgungsspannungseingang (9) ist
5.1. an einen Glättungskondensator ($C_2$),
5.2. über einen Widerstand ($R_7$, PTC) an den Wechselspannungseingang, und
5.3. an den Kathodenanschluß einer Diode $D_3$ angeschlossen, deren Anode mit dem einen Ende der Versorgungswicklung (3-4) angeschlossen ist ;

6. der Meßspannungseingang (3) ist über eine Glättung und eine während der Sperrphase des Schalttransistors ($T_1$) leitende Diode ($D_6$) an das eine Ende der Regelwicklung (5-6) angeschlossen ;

7. die Null-Durchgänge der Meßspannung registrierende der Eingang (2) ist mit dem einen Ende (5) der Regelwicklung (5-6) verbunden ;

gekennzeichnet durch die folgenden weiteren Merkmale :

8. ein zur Stromführung in der Flußphase gepolter Transistor ($T_2$) ist emitterseitig mit dem Versorgungsspannungseingang (9) der Ansteuerschaltung (IS) und kollektorseitig über eine Diode ($D_5$) mit dem einen Ende (5) der Regelwicklung (5-6) verbunden ; und

9. die Basis dieses Transistors ($T_2$) ist über einen Widerstand ($R_{12}$) mit dem Emitter und über eine Zenerdiode (Z) mit dem anderen Ende der Versorgungswicklung (3-4) verbunden.

2. Schaltungsanordnung nach Anspruch 1, dadurch gekennzeichnet, daß der Widerstand ein Kaltleiter (PTC) ist.

3. Schaltungsanordnung nach Anspruch 1 oder 2, dadurch gekennzeichnet, daß zur selektiven Siebung ein LC-Serienschwingkreis (Saugkreis L4/C7) vorgesehen ist, der über einen Widerstand (R5) an den die Null-Durchgänge der Meßspannung registrierenden Eingang (2) der Ansteuerschaltung (IS) gelegt ist.

4. Schaltungsanordnung nach einem der Ansprüche 1 bis 3, dadurch gekennzeichnet, daß sich zwischen dem Versorgungseingang (9) der Ansteuerschaltung (IS) und dem anderen Ende (4) der Versorgungswicklung (3/4) eine weitere Zenerdiode befindet.

**Claims**

1. A circuit arrangement for a flyback converter switch-mode power supply unit comprising the following features :

1) a transformer comprises a primary winding (1-2), a primary side supply winding (3-4), a primary side control winding (5-6), and at least one secondary side winding (9-11 ; 10-12) ;

2) a switching transistor ($T_1$) switches an input voltage, which is rectified by a rectifier bridge (G) and smoothed by a capacitor ($C_1$), to the primary winding (1-2) ;

3) an integrated drive circuit (IS) is provided for driving the switching transistor ($T_1$) ;

4) the drive circuit (IS) has at least one supply voltage input (9), a measuring voltage input ( 3), and an input (2) which registers the zero transitions of the measuring voltage ;

5) the supply voltage input (9) is connected :

5.1. to a smoothing capacitor ($C_2$)

5.2. to the a.c. voltage input via a resistor ($R_7$, PTC) and

5.3. to the cathode terminal of a diode $D_3$ whose anode is connected to one end of the supply winding (3-4) ;

6) the measuring voltage input (3) is connected, via a smoothing device and a diode ($D_6$) conductive during the blocking phase of the switching transistor ($T_1$), to one end of the control winding (5-6) ;

7) the input (2), which registers the zero transitions of the measuring voltage, is connected to one end (5) of the control winding (5-6) ;

characterised by the following further features :

8) a transistor ($T_2$), poled to conduct current in the forward phase, is connected by its emitter to the supply voltage input (9) of the drive circuit (IS) and is connected by its collector via a diode ($D_5$) to one end (5) of the control winding (5-6) ; and

9) the base of this transistor ($T_2$) is connected via a resistor ($R_{12}$) to the emitter, and via a Zener diode (Z) to the other end of the supply winding (3-4).

2. A circuit arrangement as claimed in Claim 1, characterised in that the resistor is a cold conductor (PTC).

3. A circuit arrangement as claimed in Claim 1 or 2, characterised in that, for selective filtering, a LC series oscillatory circuit (soak-up circuit L4/C7) is provided, which is connected via a resistor (R5) to that input (2) of the drive circuit (IS) which records the zero transitions of the measuring voltage.

4. A circuit arrangement as claimed in one of Claims 1 to 3, characterised in that a further Zener diode is arranged between the supply input (9) of the drive circuit (IS) and the other end (4) of the supply winding (3/4).

## Revendications

1. Montage pour un bloc d'alimentation commuté comprenant un convertisseur à oscillateur bloqué, présentant les particularités suivantes :

1. un transformateur comporte un enroulement primaire (1-2), un enroulement d'alimentation (3-4) côté primaire, un enroulement de réglage (5-6) côté primaire et au moins un enroulement (9-11 ; 10-12) côté secondaire ;

2. un transistor de commutation ($T_1$) applique à l'enroulement primaire (1-2) une tension d'entrée redressée par un redresseur en.pont (G) et lissée par un condensateur ($C_1$) ;

3. un circuit intégré d'attaque (IS) est prévu pour l'attaque du transistor de commutation ($T_1$) ;

4. le circuit d'attaque (IS) présente au moins une entrée de tension d'alimentation (9), une entrée de tension de mesure (3) et une entrée (2) enregistrant les passages par zéro de la tension de mesure ;

5. l'entrée de tension d'alimentation (9) est connectée

5.1. à un condensateur de lissage ($C_2$) ;

5.2. à travers une résistance ($R_7$, PTC) à l'entrée de tension alternative et

5.3. à la borne de cathode d'une diode ($D_3$) dont l'anode est reliée à une extrémité de l'enroulement d'alimentation (3-4) ;

6. l'entrée de tension de mesure (3) est reliée à une extrémité de l'enroulement de réglage (5-6) à travers un dispositif de lissage et une diode ($D_6$) qui est conductrice pendant la phase de blocage du transistor de commutation ($T_1$) ;

7. l'entrée (2) enregistrant les passages par zéro de la tension de mesure est reliée à une extrémité (5) de l'enroulement de réglage (5-6) ;

caractérisé en ce que :

8. un transistor ($T_2$) polarisé pour faire passer le courant dans la phase de conduction, est connecté par son émetteur à l'entrée de la tension d'alimentation (9) du circuit d'attaque (IS) et par son collecteur, à travers une diode ($D_5$), à une extrémité (5) de l'enroulement de réglage (5-6) ; et

9. la base de ce transistor ($T_2$) est reliée à travers une résistance ($R_{12}$) à l'émetteur et à travers une diode Zener (Z) à l'autre extrémité de l'enroulement d'alimentation (3-4).

2. Montage selon la revendication 1, caractérisé en ce que la résistance est un thermistor (PTC).

3. Montage selon la revendication 1 ou 2, caractérisé en ce qu'un circuit oscillant série LC (circuit aspirant L5/C7) est prévu pour le filtrage sélectif, circuit qui est relié à travers une résistance (R5) à l'entrée (2) du circuit d'attaque (IS) enregistrant les passages par zéro de la tension de mesure.

4. Montage selon une des revendications 1 à 3, caractérisé en ce qu'une autre diode Zener se trouve entre l'entrée d'alimentation (9) du circuit d'attaque (IS) et l'autre extrémité (4) de l'enroulement d'alimentation (3/4).